# EUROPÄISCHE PATENTSCHRIFT

(11) **EP 1 341 110 B1**
(45) Veröffentlichungstag und Bekanntmachung des Hinweises auf die Patenterteilung: **25.06.2014**
(21) Anmeldenummer: 03003542.2
(22) Anmeldetag: 17.02.2003
(51) Int. Cl.: G06Q 30/02

(54) **Verfahren, System und Computerprogrammprodukt zur Darbietung von Multimedia-Inhalten in Aufzugsanlagen**
Method, system and computer program product for displaying multimedia content in elevators
Procédé, système et logiciel pour l'affichage du contenu multimédia dans des ascenseurs

(30) Priorität: 01.03.2002 EP 02405158
(43) Veröffentlichungstag der Anmeldung: 03.09.2003
(73) Patentinhaber: Inventio AG, 6052 Hergiswil (CH)
(72) Erfinder: Meyer, Thomas, 6343 Rotkreuz (CH)

(56) Entgegenhaltungen:
- WO-A-01/61612
- DE-A1- 4 308 193
- US-A- 6 082 500
- US-B1- 6 349 797

## Beschreibung

Die Erfindung bezieht sich auf ein Verfahren, ein System und ein Computerprogrammprodukt zur Darbietung von Multimedia-Inhalten in Aufzugsanlagen gemäss der Definition der Patentansprüche.

Die Schrift US 6,288,688 offenbart ein rechnergestütztes System zur Verteilung und Anzeige von digitaler Werbung (short messages) in Aufzugskabinen. In den Aufzugskabinen sind Bildschirme montiert, die über Kommunikationsverbindungen mit einer Kontrolleinheit verbunden sind. Die Kontrolleinheit weist einen Datenspeicher mit digitaler Werbung auf. Die digitale Werbung wird einzeln adressiert an die Bildschirme versendet.

Das Dokument WO 01/61612 A beschreibt eine elektronische Werbevorrichtung und ein Verfahren zum Bereitstellen von zielgerichteter Werbung an eine oder mehreren Personen in Abhängigkeit eines individuellen Konsumentenprofils. Dabei enthält die Vorrichtung oder das System einen Sensor oder Empfänger zum Empfangen von Identifizierungssignalen. Diese Signale werden zum Bereitstellen von benutzerindividueller Werbung verwendet

Unter Multimedia wird die Integration von unterschiedlichen Medien in einer Vorrichtung verstanden. Multimedia-Inhalte bestehen aus Musikstücken, SMS (Short Message Service), EMS (Enhanced Messaging Service), MMS (Multimedia Messaging Service), Texten, Bildern, Videos, Filmen, aber auch aus Düften, Lichteffekten, usw.. Multimedia-Inhalte lassen sich mittels Computer über Ein- und Ausgabemittel wie Bildschirme, Lautsprecher, Tastaturen, Mikrofone, Zerstäuber, Lampen, usw. darbieten.

Aufgabe der vorliegenden Erfindung ist es, ein Verfahren, ein System und ein Computerprogrammprodukt bereit zustellen, um Multimedia-Inhalte in Aufzugsanlagen darzubieten. Insbesondere sollen individuell auf den Benutzer der Aufzugsanlage zugeschnittene Multimedia-Inhalte dargeboten werden.

Diese Aufgabe wird durch die Erfindung gemäss der Definition der Patentansprüche gelöst.

Erfindungsgemäss wird für einen Benutzer mindestens ein individuelles Benutzerprofil mit Multimedia-Inhalten geführt wird. Dieses Benutzerprofil ist personalisiert, d.h. es enthält vom Benutzer ausgewählte, bevorzugte Multimedia-Inhalte. Das Benutzerprofil ist reichhaltig, d.h. der Benutzer wählt bevorzugte Multimedia-Inhalte aus einem grossen Angebot aus. Das Benutzerprofil ist weitreichend, d.h. der Benutzer empfängt Multimedia-Inhalte, wo immer er identifiziert wird.

Vorteilhafterweise wird der Benutzer vor dem bzw. nach dem Betreten einer Aufzugskabine identifiziert. Die Identifikation erfolgt vorzugsweise per Identifikations-Code. Die Gültigkeit dieses erkannten Identifikations-Codes wird von einer Prüfvorrichtung geprüft. Bei gültigem Identifikations-Code gilt der Benutzer als identifiziert.

Einem identifizierten Benutzer werden die in seinem Benutzerprofil geführten Multimedia-Inhalte dargeboten. Vorteilhafterweise werden diese Multimedia-Inhalte aus mindestens einer Inhalte-Datenbank geladen und über mindestens ein Ausgabemittel vor der bzw. in der Aufzugskabine dargeboten. Multimedia-Inhalte werden von mindestens einem Provider bereitgestellt und in der Inhalte-Datenbank auf Abruf gespeichert. Vorteilhafterweise werden die Multimedia-Inhalte kategorisiert nach demographischen Förderpräferenzen, psychographischen Förderpräferenzen sowie situativen Förderpräferenzen dargeboten.

Die Kommunikation der Inhalte-Datenbank bzw. der Aussenwelt mit der eigentlichen Aufzugsanlage erfolgt über einen Schutzwall. Die Multimedia-Inhalte werden somit durch den Schutzwall separiert von der Aufzugsanlage bereitgestellt. Etwaige Hacker und Internet-Viren werden so am Zugriff auf die Aufzugsanlage über die Kommunikationsmittel mit der Aussenwelt gehindert.

Das System arbeitet mit bekannten und bewährten Mitteln der Kommunikationstechnik und ist in installierten Aufzugsanlagen nachrüstbar. Hierzu werden mindestens eine Erkennungsvorrichtung zum Erkennen eines Identifikations-Codes, mindestens eine Prüfvorrichtung zum Identifizieren eines Benutzers anhand eines erkannten Identifikations-Codes, mindestens eine Inhalte-Datenbank zum Führen mindestens eines Benutzerprofils mit Multimedia-Inhalten und mindestens ein Ausgabemittel zum Darbieten von im Benutzerprofil geführten Multimedia-Inhalten installiert.

Im Folgenden wird die Erfindung anhand beispielhafter Ausführungsformen gemäss **Fig. 1 bis 3** im Detail erläutert. Hierbei zeigt:
- **Fig. 1**: eine schematische Darstellung einer beispielhaften Ausführungsform eines Systems zur Darbietung von Multimedia-Inhalte in Aufzugsanlagen,
- **Fig. 2**: eine Prinzipdarstellung eines Systems zur Darbietung von Multimedia-Inhalte in Aufzugsanlagen, und
- **Fig. 3**: eine schematische Darstellung eines Ausgabemittels für das System gemäss **Fig. 1** oder **2**.

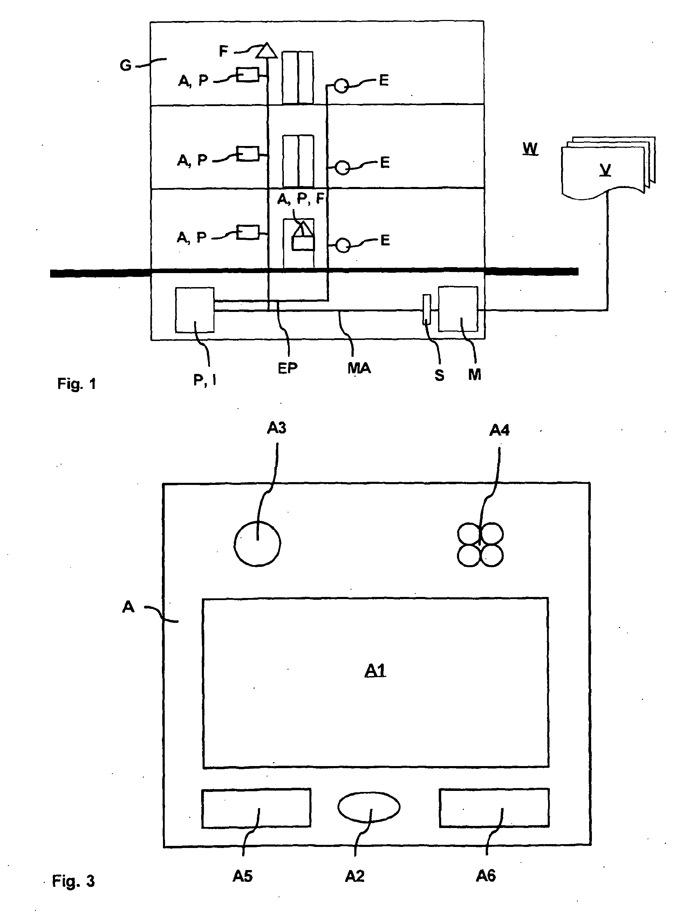

**Zum System, zur Aufzugsanlage:** **Fig. 1** zeigt schematisch eine beispielhafte Ausführungsform eines Systems zur Darbietung von Multimedia-Inhalte in Aufzugsanlagen. Das System umfasst mindestens eine Erkennungsvorrichtung **E**, mindestens eine Prüfvorrichtung **P**, mindestens eine Identifikations-Datenbank **I**, mindestens eine Aufzugssteuerung **B**, mindestens eine Inhalte-Datenbank **M** sowie mindestens ein Ausgabemittel **A**. Die Aufzugsanlage ist in einem Gebäude **G** bzw. Gebäudekomplex installiert und befördert Benutzer von einem Stockwerk zu einem anderen Stockwerk. Gemäss **Fig. 1** sind drei Stockwerke abgebildet. Die Aufzugsanlage wird beispielsweise elektrisch bzw. hydraulisch betrieben. Vorteilhafterweise ist in jedem Stockwerk eine Erkennungsvorrichtung **E** sowie ein Ausgabemittel **A** neben einer Stockwerktür zur Aufzugsanlage montiert. Alternativ ist es natürlich möglich, nur eine einzige Erkennungsvorrichtung **E**, beispielsweise im Erdgeschoss des Gebäudes **G** zu montieren. Vorteilhafterweise ist in einer Aufzugskabine der Aufzugsanlage ein Ausgabemittel **A** installiert. Gemäss **Fig. 1** befindet sich die Aufzugskabine im Erdgeschoss des Gebäudes **G**, durch die offenen Aufzugstüren ist das ein Ausgabemittel **A** der Aufzugskabine zu erkennen. Gemäss **Fig. 1** befinden sich die Prüfvorrichtung **P,** die Identifikations-Datenbank **I** und die Inhalte-Datenbank **M** in einem Untergeschoss des Gebäudes **G** und die Aufzugssteuerung **B** befindet sich auf einem oberen Stockwerk des Gebäudes **G**.

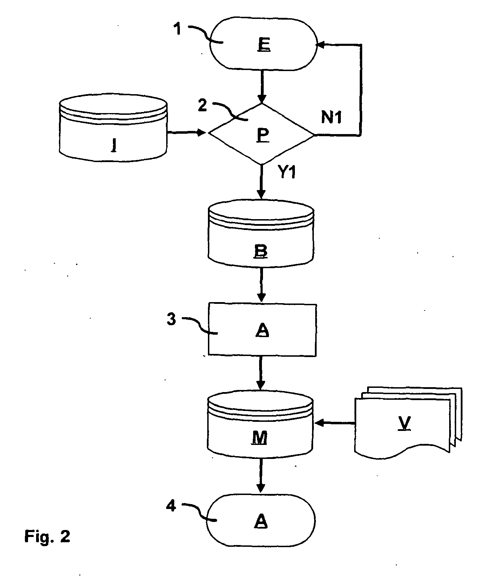

**Zur Identifikation:** **Fig. 2** zeigt eine beispielhafte Prinzipdarstellung eines Systems zur Darbietung von Multimedia-Inhalte. Zur Darbietung von Multimedia-Inhalten meldet sich ein Benutzer mit einem Identifikations-Code beim System an. Eine solche Anmeldung **1** erfolgt vorteilhafterweise über eine Erkennungsvorrichtung **E** zum Erkennen eines Identifikations-Codes. Dabei lassen sich mehrere Ausführungsformen der Anmeldung **1** unterscheiden:
- In einer ersten bevorzugten Ausführungsform der Anmeldung **1** wird der Identifikations-Code von einem Identifikationsgeber an die Erkennungsvorrichtung **E** übermittelt. Ein solches berührungsloses Erkennen eines Identifikations-Codes ist aus der Schrift EP 699,617 bekannt. Der Identifikationsgeber ist hier ein Transponder mit Transponderantenne und Geber-Elektronik. Die Geber-Elektronik des Identifikationsgebers weist eine Sende- und Empfangseinheit und einen Datenspeicher mit mindestens einem Identifikations-Code auf. Der Identifikationsgeber wird durch Induktion über ein elektromagnetisches Feld mit einer Betriebsspannung gespeist. Vorzugsweise strahlt die Erkennungsvorrrichtung **E** ein solches elektromagnetisches Feld ab. Sobald sich der Identifikationsgeber in der Nähe der Erkennungsvorrichtung **E** befindet, wird er mit Energie versorgt und sendet den Identifikations-Code an die Erkennungsvorrichtung **E**. Beispielsweise wird der Identifikationsgeber hierzu in einige Zentimeter bis mehrere Meter Entfernung vor die Erkennungsvorrichtung **E** gehalten. Die Erkennungsvorrichtung **E** empfängt den Identifikations-Code über eine entsprechend ausgebildete Sende- und Empfangsantenne. Beliebige les- bzw. beschreibbare Informationsgeber respektive Erkennungsvorrichtungen lassen sich realisieren. So sind Informationsgeber, die auf der Basis von Licht berührungslos mit einer Erkennungsvorrichtung wie ein Scanner kommunizieren, ebenfalls anwendbar. Auch sind Informationsgeber in Form von Magnetkarten, elektronischen Chips, usw., die über mindestens einen vermittelnden Kontakt mit einer Erkennungsvorrichtung kommunizieren, anwendbar.
- In weiteren Ausführungsformen der Anmeldung **1** wird der Identifikations-Code vom Benutzer mechanisch, beispielsweise über eine Tastatur der Erkennungsvorrichtung **E** und/oder akkustisch, beispielsweise über ein Mikrofon der Erkennungsvorrichtung **E** einzugeben. Natürlich kann der Fachmann bei Kenntnis der vorliegenden Erfindung andere Eingabemittel wie ein Ausgabemittel **A** mit berührungsempfindlicher Bildschirm-Oberfläche, eine Mobile-Telefon-Tastatur, usw. benutzen.
- Schliesslich ist es möglich, einen biometrischen Identifikations-Code des Benutzers wie einen Fingerabdruck, ein Irismuster, eine Gesichtskontur, usw. mit einer Erkennungsvorrichtung zu erkennen.

**Zur Prüfung:** Die Erkennungsvorrichtung **E** leitet den erkannten Identifikations-Code zur Prüfung **2** an die Prüfvorrichtung **P** weiter. Mindestens eine Prüfvorrichtung **P** ist notwendig, mehrere Prüfvorrichtungen **P** lassen sich einsetzen. Die Prüfvorrichtung **P** ist rechnergestützt. Unter "rechnergestützt" wird eine handelsübliche Recheneinheit wie ein PC (Personal Computer) mit dem Betriebssystem Windows, Apple, usw., bzw. eine Workstation mit dem Betriebssystem UNIX, usw. verstanden. Die Identifikations-Datenbank **I** ist vorzugsweise eine relationale Datenbank wie Access, Lotus Notes, Oracle, SAP, usw. bzw. eine XML (Extensible Markup Language)-Datenbank, usw.. Die Identifikations-Datenbank **I** kann in einer rechnergestützten Vorrichtung angeordnet sein. Erkennungsvorrichtung **E**, Prüfvorrichtung **P** und Identifikations-Datenbank **I** sind mit Ein- und Ausgängen zur Kommunikation versehen. Vorzugsweise erfolgt die Kommunikation zwischen Erkennungsvorrichtung **E**, Prüfvorrichtung **P** und Identifikations-Datenbank **I** auf einem Erkennungs-Bus **EP** gemäss einem bekannten Standard-Protokoll wie PCI (Peripheral Component Interconnect)-Bus, Ethernet, Token-Ring, usw., vorzugsweise per Funk und/oder Kabel. Die Prüfvorrichtung **P** kann mobil bzw. stationär ausgebildet sein. Prüfvorrichtung **P** und Identifikations-Datenbank I können - wie in **Fig. 1** gezeigt - in einem einzigen Gehäuse integriert sein, sie können aber auch separat an verschiedenen Orten platziert sein. Natürlich ist es auch möglich, Erkennungsvorrichtung **E**, Prüfvorrichtung **P** und Identifikations-Datenbank **I** in einem einzigen Gehäuse zu realisieren. Ferner ist es möglich Prüfvorrichtung **P** und Ausgabemittel **A** - wie in **Fig. 1** gezeigt - in einem einzigen Gehäuse zu integrieren.

Vorteilhafterweise ist in der Prüfvorrichtung **P** ein Computerprogrammprodukt installiert. Das Computerprogrammprodukt vergleicht den erkannten Identifikations-Code mit Identifikations-Adressen, die in der Identifikations-Datenbank **I** gespeichert sind. Der Benutzer ist über eine Identifikations-Adresse eindeutig identifizierbar. Für jede Identifikations-Adresse existiert ein Identifikations-Code. Beispielsweise ist eine Identifikations-Adresse genau dann einem erkannten Identifikations-Code zuordenbar, wenn Identifikations-Adresse und Identifikations-Code identisch sind. Gemäss **Fig. 2** liefert das Computerprogrammprodukt dann ein positives Zuordnungs-Ergebnis **Y1**, wenn eine der gespeicherten Identifikations-Adressen mit dem Identifikations-Code identisch ist, andernfalls liefert das Computerprogrammprodukt ein negatives Zuordnungs-Ergebnis **N1**. Ein solches negatives Zuordnungs-Ergebnis wird beispielsweise an die Erkennungsvorrichtung **E** übermittelt, von welcher der Identifikations-Code übermittelt worden ist und der Benutzer wird über ein Ausgabemittel **A** dieser Erkennungsvorrichtung **E** zu einer nochmaligen Anmeldung **1** aufgefordert. Bei mehrmaligem negativen Zuordnungs-Ergebnis kann dem Benutzer eine neutrale, nicht individualisierte Gäste-Adresse zugeordnet werden. Das Computerprogrammprodukt ist beispielsweise in einer gängigen und bewährten Computersprache geschrieben. Beispielsweise ist das Computerprogrammprodukt in einem Speicher gespeichert und wird zur Ausführung des Computerprogrammproduktes in einen Prozessor geladen.

**Zur Zuordnung von Multimedia-Inhalten:** Dem gemäss einem Identifikations-Code identifizierten Benutzer werden in einem Abruf **3** Multimedia-Inhalte aus der Inhalte-Datenbank **M** bereitgestellt. Die Inhalte-Datenbank **M** ist rechnergestützt. Sie weist Einund Ausgänge zur Kommunikation mit der Prüfvorrichtung **P**, dem Ausgabemittel **A** und dem Provider **V** auf. Vorteilhafterweise ist in der Inhalte-Datenbank **I** mindestens ein Computerprogrammprodukt installiert, das einer Identifikations-Adresse des Benutzers ein Benutzerprofil mit in der Inhalte-Datenbank **M** gespeicherten Multimedia-Inhalten zuordnet. Die Multimedia-Inhalte bestehen aus Musikstücken, SMS, EMS, MMS, Texten, Bildern Videos, Filmen, Düften, Lichteffekten, usw.. Auch hier gilt, dass das Computerprogrammprodukt in einer gängigen und bewährten Computersprache geschrieben sein kann. Beispielsweise ist das Computerprogrammprodukt in einem Speicher gespeichert und wird zur Ausführung des Computerprogrammproduktes in einen Prozessor geladen.

**Zur Übermittlung der Multimedia-Inhalte:** Die einer Identifikations-Adresse entsprechenden Multimedia-Inhalte werden in einer Darbietung **5** auf dem Ausgabemittel **A** vor der bzw. in der Aufzugskabine dargeboten. Die Inhalte-Datenbank **M** und das Ausgabemittel **A** kommunizieren vorzugsweise auf einem Inhalte-Bus **MA** gemäss einem bekannten Standard-Protokoll wie PCI-Bus, Ethernet, Token-Ring, usw. per Kabel und/oder per Funk. Natürlich ist es auch möglich Multimedia-Inhalte per Post - beispielsweise auf einer CD (Compact Disk) gespeichert - zu übermitteln.

Gemäss **Fig. 1** kommunizieren die Ausgabemittel **A** in den Stockwerken per Kabel mit der Inhalte-Datenbank **M**, während das Ausgabemittel **A** in der Aufzugskabine per Funk über einen Sender **F** und per Kabel mit der Inhalte-Datenbank **M** kommuniziert. Das Ausgabemittel **A** ist gemäss **Fig. 3** beispielsweise ein Bildschirm mit mehreren Bereichen **A1, A2, A3, A4, A5, A6**. Beispielsweise handelt es sich beim Ausgabemittel **A** um einen rechnergestützten Bildschirm mit ersten, zweiten, dritten und vierten Bereichen **A1, A2, A3, A4** zur Ausgabe von Multimedia-Inhalten und mit fünften und sechsten Bereichen **A5, A6** zur Kommunikation mit der Inhalte-Datenbank **M.** Die Kommunikation ist vorzugsweise bidirektionell. Das Ausgabemittel **A** empfängt von der Inhalte-Datenbank **M** Multimedia-Inhalte und gibt sie in einem ersten Bereich **A1** graphisch bzw. in einem zweiten Bereich **A2** akkustisch bzw. in einem dritten Bereich **A3** aromatisch bzw. in einem vierten Bereich **A4** optisch aus. Beispielsweise ist der erste Bereich **A1** ein Bildschirm, der zweite Bereich **A2** ein Lautsprecher, der dritte Bereich **A3** eine Duftmaschine und der vierte Bereich **A4** eine Lichtmaschine. Unter einer Duftmaschine wird ein Zerstäuber mit einem Duft bzw. mit mehreren, frei wähl- und mischbaren Düften verstanden, welcher Zerstäuber diese/n Duft/Düfte zerstäubt. Unter einer Lichtmaschine wird mindestens eine steuer- bzw. regelbare Lampe verstanden, welche Lampe Lichteffekte aussendet.

Vorteilhafterweise übermittelt das Ausgabemittel **A** Signale an die Inhalte-Datenbank **M** bzw. an die Prüfvorrichtung **P**. Beispielsweise sind der fünfte und sechste Bereich **A5, A6** berührungsempfindlich und ermöglichen die Generierung solcher Signale durch den Benutzer. Mit solchen Signalen kann ein Benutzer beispielsweise einen Multimedia-Inhalt bestätigen bzw. abwählen. Zum Bestätigen eines Multimedia-Inhaltes betätigt der Benutzer einen fünften Bereich **A5**, zum Abwählen eines eines Multimedia-Inhaltes betätigt der Benutzer einen sechsten Bereich **A6**. Solange ein Benutzer einen Multimedia-Inhalt nicht aktiv abwählt, gilt der Multimedia-Inhalt als erwünscht. Natürlich sind auch andere Mittel zur Generierung solcher Signale - wie ein Mikrofon gekoppelt mit einer Spracherkennung - zum Erfassen von Sprachbefehlen einsetzbar. Der Fachmann hat bei Kenntnis der vorliegenden Erfindung diesbezüglich vielfache Möglichkeiten.

Vorteilhafterweise ist in der Inhalte-Datenbank **I** mindestens ein Computerprogrammprodukt installiert, das Multimedia-Inhalte eines Benutzerprofils als mindestens ein cookie an ein Ausgabemittel **A** übermittelt. Unter einem cookie wird eine Datei verstanden, die eine Sequenz von Multimedia-Inhalten aufweist, welche in einer bestimmten Reihenfolge dargeboten wird. Beispielsweise besteht ein cookie aus einer Sequenz von zehn Seiten, die als Reihenfolge Seite 1 bis Seite 10 dargeboten wird. Beispielsweise handelt es sich dabei um eine Fortsetzungsgeschichte, die einem Benutzer bei sukzessiven Beförderungen im Aufzug dargeboten wird. Das cookie notiert sich den aktuellen Stand der Reihenfolge, so dass nachdem beispielsweise die Seiten 1 und 2 dargeboten worden sind, bei einer sukzessiven Beförderung die Seite 3 dargeboten wird. Vorteilhafterweise lässt sich solch ein cookie in einem Datenspeicher des Ausgabemittels **A** speichern. Vorteilhafterweise übermittelt die Inhalte-Datenbank **I** das cookie direkt an das Ausgabemittel **A**, in dessen Nähe sich der Benutzer befindet. Für diesen Zweck erhält ein Ausgabemittel **A** beispielsweise von der Aufzugssteuerung **B** eine Mitteilung, dass sich ein mit einem Identifikations-Code identifizierter Benutzer in seiner Nähe aufhält. Das Ausgabemittel **A** meldet sich daraufhin bei der Inhalte-Datenbank **I**. Beispielsweise übermittelt das Ausgabemittel **A** die Identifikations-Adresse des identifizierten Benutzers an die Inhalte-Datenbank **I**. Das Computerprogrammprodukt ordnet dieser Identifikations-Adresse ein Benutzerprofil mit Multimedia-Inhalten zu und übermittelt Multimedia-Inhalte dieses Benutzerprofils an dieses Ausgabemittel **A**. Das Computerprogrammprodukt ist beispielsweise in einer gängigen und bewährten Computersprache geschrieben. Beispielsweise ist das Computerprogrammprodukt in einem Speicher gespeichert und wird zur Ausführung des Computerprogrammproduktes in einen Prozessor geladen.

**Zur Struktur der Multimedia-Inhalte:** Die Multimedia-Inhalte werden vorteilhafterweise von einem System-Architekten in einer Struktur dargeboten. Die Struktur umfasst ein Gerüst, beispielsweise eine Reihenfolge von Seiten bzw. Spalten in Seiten, in welches Gerüst die Multimedia-Inhalte gefüllt werden. In einer vorteilhaften Ausführungsform werden die Multimedia-Inhalte mit einer Software namens Flash der Firma Macromedia als Flash-Film strukturiert. Die Software Flash erlaubt das einfache und rasche Erstellen von ansprechenden Designs, ausgefallenen Animationen, welche mit Musik versehen sind. Andere Software wie HTML (HyperText Markup Language) kann natürlich auch verwendet werden.

Die Multimedia-Inhalte sind kategorisiert. Der System-Architekt bietet dem Benutzer in seinem Benutzerprofil eine Vielzahl von kategorisierten Multimedia-Inhalten an. Solche Kategorien werden vorteilhafterweise unterteilt in Förderpräferenzen wie demographische Förderpräferenzen, psychographische Förderpräferenzen sowie situative Förderpräferenzen.

Demographische Förderpräferenzen sind beispielsweise:
- die Darbietungssprache (beispielsweise DE, GB, FR, IT, usw.)
- das Geschlecht des Benutzers (männlich / weiblich)
- das Alter des Benutzers (beispielsweise unterteilt in Altersklassen von 0-13, 14-20, 21-30, 31-40, 41-50, 51-65, 66-80, 81-120 Jahren)
- Zivilstand (beispielsweise ledig, verheiratet, geschieden, verwitwet)
- Einkommen (beispielweise unterteilt in Einkommensklassen von 0-30,000, 30,001-60,000, 60,001-90,000, 90,001-120,000, 120,001-180,000, >180,000 CHF/Jahr)

Psychographische Förderpräferenzen sind beispielsweise:
- Informationspräferenzen (beispielsweise Wetterbericht, Horoskop, Börsenspiegel, Sportnachrichten, Aktualitäten, Lokalnachrichten, usw.)
- Kulturpräferenzen (beispielsweise italienisches Essen, chinesisches Essen, Wein, Zigarren, usw.)
- Musikpräferenzen (beispielsweise Popmusik, klassische Musik, Jazz-Musik, usw.)
- Duftpräferenzen (beispielsweise Lavendel, Pfefferminze, Eukalyptus, usw.)
- Lichtpräferenzen (beispielsweise heftige Blitze, mattes warmes Licht, usw.)

Situative Förderpräferenzen sind beispielsweise:
- Zonenpräferenzen (beispielsweise vorbestimmte Zonen, Stockwerke eines Gebäudes **G**)
- Periodenpräferenzen (beispielsweise vorbestimmte Perioden (Vormittags, Nachmittags, Nachts), Uhrzeiten (, Kaffeepausenzeit, Mittagszeit), usw.)

Vorteilhafterweise ist ein Computerprogrammprodukt vorgesehen, welches Multimedia-Inhalte für ein Benutzerprofil kategorisiert. Das Computerprogrammprodukt ist beispielsweise in einer gängigen und bewährten Computersprache geschrieben. Beispielsweise ist das Computerprogrammprodukt in einem Speicher gespeichert und wird zur Ausführung des Computerprogrammproduktes in einen Prozessor geladen. Jede Kategorie weist mindestens einen spezifischen Multimedia-Inhalt auf. Vorzugsweise weist jede Kategorie mehrere spezifische Multimedia-Inhalte auf. Beispielsweise weist die Kategorie "Informationspräferenz" spezifische Multimedia-Inhalte wie "Wetterbericht, Horoskop, Börsenspiegel, Sportnachrichten, Aktualitäten, Lokalnachrichten, usw." auf.

Die verschiedenen Kategorien sind miteinander gemäss mindestens eines logischen Gatters wie "UND", "ODER", "NICHT" verknüpfbar. Beispielsweise lässt sich eine psychographische Förderpräferenz durch eine situative Förderpräferenz modulieren, beispielsweise durch Anpassen der "Informationspräferenz" mit der "Periodenpräferenz", derart, dass morgens der Wetterbericht, mittags der Börsenspiegel und abends die Aktualitäten dargeboten werden. Die Multimedia-Inhalte sind somit skalierbar, d.h. im dreidimensionalen Raum, der durch die Dimensionen Personalisierungsgrad, Reichhaltigkeit und Reichweite gespannt ist, wird für den Benutzer eine Struktur mit spezifischen Multimedia-Inhalten bereitgestellt, die für den Benutzer einen wertvollen, optimalen Inhalt darstellen.

**Zur Beschaffung der Multimedia-Inhalte:** Die Multimedia-Inhalte werden vorteilhafterweise vom Provider **V** bezogen. Vorteilhafterweise kommuniziert die Inhalte-Datenbank **M** mit dem Provider **V** auf einem Kommunikationsmittel wie dem Internet und über etablierte Standard-Protokolle wie TCP/IP (Transmission Control Protocol / Internet Protocol), FTP (File Transfer Protocol), usw.. Die Inhalte-Datenbank **M** arbeitet vorteilhafterweise mit einer Software, basierend auf der Open Services Gateway Initiative (OSGi) Spezifikation. OSGi hat einen viel beachteten offenen Standard gesetzt, wobei die Update- bzw. Upgrade-Möglichkeiten von Multimedia-Inhalten durch den Provider **V** Aktualität und ein hohes Mass an Individualisierbarkeit ermöglichen. Die Multimedia-Inhalte werden vorzugsweise mit einem Bestellformular beim Provider **V** bezogen. Vorteilhafterweise ist ein Computerprogrammprodukt vorgesehen, welches die für die gesamte Inhalte-Datenbank **M** und pro Aktualisierungsintervall vom Provider V zu aktualisierenden Multimedia-Inhalte auflistet. Das Computerprogrammprodukt ist beispielsweise in einer gängigen und bewährten Computersprache geschrieben. Beispielsweise ist das Computerprogrammprodukt in einem Speicher gespeichert und wird zur Ausführung des Computerprogrammproduktes in einen Prozessor geladen. Die Aktualisierungsintervalle können je nach Kategorie variieren, beispielsweise wird das Horoskop alle 24 Stunden aktualisiert, der Wetterbericht wird alle 12 Stunden aktualisiert, während der Börsenspiegel alle 2 Minuten aktualisiert wird. Beispielhafte Aktualisierungsintervalle sind alle 24 bzw. alle 8 alle 2 Stunden bzw. alle 60 bzw. alle 15 bzw. alle 2 Minuten bzw. alle 60 bzw. alle 15 Sekunden.

**Zum Schutz der Aufzugsanlage:** Gemäss **Fig. 1** ist die Inhalte-Datenbank **M** als separate Recheneinheit im Gebäude **G** der Aufzugsanlage angeordnet, während sich der Provider **V** in einer Aussenwelt **W**, ausserhalb des Gebäudes **G** befinden. Um eine sicheren Betrieb der Aufzugsanlage zu garantieren, d.h. um einen Ausfall der Aufzugsanlage durch Hacker und Internet-Viren zu mit hoher Wahrscheinlichkeit verhindern, ist die Inhalte-Datenbank **M** mit einem Schutzwall **S** versehen. Die Kommunikation der Inhalte-Datenbank **M** mit der eigentlichen Aufzugsanlage im Gebäude **G** erfolgt über diesen Schutzwall **S**. Vorteilhafterweise ist ein Computerprogrammprodukt vorgesehen, welches die Multimedia-Inhalte durch den Schutzwall **S** in die Aufzugsanlage lädt: Das Computerprogrammprodukt ist beispielsweise in einer gängigen und bewährten Computersprache geschrieben. Beispielsweise ist das Computerprogrammprodukt in einem Speicher gespeichert und wird zur Ausführung des Computerprogrammproduktes in einen Prozessor geladen. Insbesondere überwacht und regelt der Schutzwall S den Zugang von der Inhalte-Datenbank **M** zur Erkennungsvorrichtung **E**, zur Prüfvorrichtung **P**, zur Identifikations-Datenbank **I**, zum Ausgabemittel **A** und zur Aufzugssteuerung **B** per Standard-Protokoll regelt. Ein derartiger Schutzwall S ist eine Software, die bei Firmen wie McAfee, PGP (Pretty Good Privacy), Symantec, usw. kommerziell erhältlich ist. Ein Schutzwall **S** arbeitet mit Sicherheitskriterien wie Identifikationsnummer, Verschlüsselungszertifikaten, usw.. Vorteilhafterweise - und wie in der Ausführungsform gemäss **Fig. 1** gezeigt - ist ein solcher Schutzwall **S** in einer separaten Recheneinheit installiert. Die im Gebäude **G** der Aufzugsanlage angeordnete Inhalte-Datenbank **M** ist somit für die Aussenwelt **W** über Standard-Protokolle les/beschreibbar, etwaige Hacker und Internet-Viren werden jedoch durch den Schutzwall **S** am Zugriff auf Zugang zur Erkennungsvorrichtung **E**, zur Prüfvorrichtung **P**, zur Identifikations-Datenbank **I**, zum Ausgabemittel **A** und zur Aufzugssteuerung **B** verhindert. Anstatt die Inhalte-Datenbank **M** dezentral bzw. lokal im Gebäude der Aufzugsanlage anzuordnen, kann die Inhalte-Datenbank **M** ebenso gut ein zentraler bzw. nationaler bzw. globaler Remote-Server sein, der Aufzugsanlagen in mehreren Gebäuden, Städten, Ländern mit Multimedia-Inhalten zentral bedient.

## Patentansprüche

1. Verfahren zur Darbietung von Multimedia-Inhalten in Aufzugsanlagen an identifizierte Benutzer,
**dadurch gekennzeichnet,**
**dass** für einen Benutzer mindestens ein individuelles Benutzerprofil (BP, BP', BP") mit Präferenzen zu Multimedia-Inhalten in einer Identifikations-Datenbank (I) geführt wird,
**dass** die Multimedia-Inhalte in einer Inhalte-Datenbank (M) gespeichert und durch einen Schutzwall (S) von der Aufzugsanlage separiert bereitgestellt werden, wobei die Aufzugsanlage mindestens, die Identifikations-Datenbank (I) aufweist, wobei die Kommunikation der Inhalte-Datenbank (M) mit der eigentlichen Aufzugsanlage in einem Gebäude (G) über den Schutzwall (S) erfolgt, und
**dass** dem identifizierten Benutzer die Multimedia-Inhalte aus der Inhalte-Datenbank (M) gemäss seinem Benutzerprofil (BP, BP', BP") aus der Identifikations-Datenbank (I) über den Schutzwall (S) an mindestens ein Ausgabemittel (A) übermittelt und ihm dargeboten werden.

2. Verfahren gemäss Anspruch 1, **dadurch gekennzeichnet, dass** die Multimedia-Inhalte bei mindestens einem Provider (V) bezogen werden und/oder dass die Multimedia-Inhalte bei mindestens einem Provider (V) aktualisiert werden.

3. System zur Darbietung von Multimedia-Inhalten in einer Aufzugsanlage an identifizierte Benutzer,
**dadurch gekennzeichnet,**
**dass** mindestens eine Erkennungsvorrichtung (E) einen Identifikations-Code erkennt,
**dass** mindestens eine Prüfvorrichtung (P) den erkannten Identifikations-Code identifiziert,
**dass** eine Identifikations-Datenbank (I) für einen Benutzer mindestens ein individuelles Benutzerprofil (BP, BP', BP") mit Präferenzen zu Multimedia-Inhalten führt, wobei die Aufzugsanlage mindestens die Identifikations-Datenbank (I) aufweist,
**dass** mindestens eine Inhalte-Datenbank (M) die Multimedia-Inhalte speichert und durch einen Schutzwall (S) von der Aufzugsanlage separiert bereitstellt, wobei die Kommunikation der Inhalte-Datenbank (M) mit der eigentlichen Aufzugsanlage in einem Gebäude (G) über den Schutzwall (S) erfolgt, und
**dass** die Inhalte-Datenbank (M) bei Identifizierung des Benutzers die Multimedia-Inhalte gemäss seinem Benutzerprofil (BP, BP', BP") über den Schutzwall (S) an mindestens ein Ausgabemittel (A) übermittelt und
**dass** das Ausgabemittel (A) dem Benutzer die Multimedia-Inhalte darbietet.

4. Computerprogrammprodukt zur Darbietung von Multimedia-Inhalten in einer Aufzugsanlage an identifizierte Benutzer,
**dadurch gekennzeichnet,**
**dass** das Computerprogrammprodukt mindestens einen erkannten Identifikations-Code eines Benutzers mit Identifikations-Adressen in einer Identifikations-Datenbank (I) vergleicht, wobei die Aufzugsanlage mindestens die Identifikations-Datenbank (I) aufweist,
**dass** das Computerprogrammprodukt den Benutzer durch Zuordnung des erkannten Identifikations-Codes zu einer Identifikations-Adresse identifiziert,
**dass** das Computerprogrammprodukt der Identifikations-Adresse ein individuelles Benutzerprofil (BP, BP', BP") mit Präferenzen zu Multimedia-Inhalten zuordnet, und
**dass** das Computerprogrammprodukt die Multimedia-Inhalte von mindestens einer Inhalte-Datenbank (M) in Abhängigkeit des Benutzerprofils (BP, BP', BP") über einen Schutzwall (S) in die Aufzugsanlage lädt, wobei die Kommunikation der Inhalte-Datenbank (M) mit der eigentlichen Aufzugsanlage in einem Gebäude (G) über den Schutzwall (S) erfolgt.

5. Computerprogrammprodukt gemäss Anspruch 4, **dadurch gekennzeichnet, dass** das Computerprogrammprodukt Multimedia-Inhalte bei mindestens einem Provider (V) bezieht und/oder dass das Computerprogrammprodukt Multimedia-Inhalte bei mindestens einem Provider (V) aktualisiert.

## Claims

1. Method for presenting multimedia contents in elevator installations to identified users,
**characterized**
**in that** at least one individual user profile (BP, BP', BP") having preferences for multimedia contents is kept for a user in an identification database (I),
**in that** the multimedia contents are stored in a content database (M) and are provided in a manner separated from the elevator installation by a firewall (S), wherein the elevator installation has at least the identification database (I), wherein the communication of the content database (M) with the actual elevator installation in a building (G) is effected via the firewall (S), and
**in that** the multimedia contents are transmitted from the content database (M) to at least one output means (A) for the identified user on the basis of his user profile (BP, BP', BP") from the identification database (I) via the firewall (S) and are presented to said user.

2. Method according to Claim 1, **characterized in that** the multimedia contents are obtained from at least one provider (V) and/or **in that** the multimedia contents are updated with at least one provider (V).

3. System for presenting multimedia contents in an elevator installation to identified users,
**characterized**
**in that** at least one recognition apparatus (E) recognizes an identification code,
**in that** at least one checking apparatus (P) identifies the recognized identification code in that an identification database (I) keeps at least one individual user profile (BP, BP', BP") having preferences for multimedia contents for a user, wherein the elevator installation has at least the identification database (I),
**in that** at least one content database (M) stores the multimedia contents and provides them in a manner separated from the elevator installation by a firewall (S), wherein the communication of the content database (M) with the actual elevator installation in a building (G) is effected via the firewall (S), and
**in that**, when the user is identified, the content database (M) transmits the multimedia contents to at least one output means (A) on the basis of his user profile (BP, BP', BP") via the firewall (S), and
**in that** the output means (A) presents the multimedia contents to the user.

4. Computer program product for presenting multimedia contents in an elevator installation to identified users,
**characterized**
**in that** the computer program product compares at least one recognized identification code for a user with identification addresses in an identification database (I), wherein the elevator installation has at least the identification database (I),
**in that** the computer program product identifies the user by associating the recognized identification code with an identification address,
**in that** the computer program product associates an individual user profile (BP, BP', BP") having preferences for multimedia contents with the identification address, and
**in that** the computer program product loads the multimedia contents from at least one content database (M) into the elevator installation on the basis of the user profile (BP, BP', BP") via a firewall (S), wherein the communication of the content database (M) with the actual elevator installation in a building (G) is effected via the firewall (S).

5. Computer program product according to Claim 4, **characterized in that** the computer program product obtains multimedia contents from at least one provider (V) and/or **in that** the computer program product updates multimedia contents with at least one provider (V).

## Revendications

1. Procédé de présentation de contenus multimédia dans des systèmes d'ascenseurs à des utilisateurs identifiés,
**caractérisé en ce que**,
pour un utilisateur, au moins un profil d'utilisateur individuel (BP, BP', BP") contenant des préférences est guidé vers des contenus multimédia dans une base de données d'identification (I),
**en ce que** les contenus multimédia sont stockés dans une base de données de contenus (M) et **en ce qu'**ils sont fournis séparément à travers un pare-feu (S) par le système d'ascenseur, dans lequel le système d'ascenseur comporte au moins la base de données d'identification (I), dans lequel la communication de la base de données de contenus (M) avec le système d'ascenseur proprement dit s'effectue dans un immeuble (G) à travers le pare-feu (S), et
**en ce que**, pour l'utilisateur identifié, les contenus multimédia provenant de la base de données de contenus (M) sont transmis, selon son profil d'utilisateur (BP, BP', BP") provenant de la base de données d'identification (I), à travers le pare-feu (S), à au moins un moyen de sortie (A) et lui sont présentés.

2. Procédé selon la revendication 1, **caractérisé en ce que** les contenus multimédia sont obtenus chez au moins un fournisseur (V) et/ou **en ce que** les contenus multimédia sont mis à jour chez au moins un fournisseur (V).

3. Système de présentation de contenus multimédia dans un système d'ascenseur à des utilisateurs identifiés,
**caractérisé en ce qu'**au moins un dispositif de détection (E) détecte un code d'identification,
**en ce qu'**au moins un dispositif de contrôle (P) identifie le code d'identification détecté,
en qu'une base de données d'identification (I), pour un utilisateur, au moins un profil d'utilisateur individuel (BP, BP', BP") contenant des préférences conduit à des contenus multimédia, dans lequel le système d'ascenseur comporte au moins la base de données d'identification (I),
**en ce qu'**au moins une base de données de contenus (M) stocke les contenus multimédia et la fournit séparément du système d'ascenseur à travers un pare-feu (S), dans lequel la communication de la base de données de contenus (M) avec le système d'ascenseur proprement dit s'effectue dans un immeuble (G) à travers le pare-feu (S), et
**en ce que** la base de données de contenus (M) transmet les contenus multimédia à travers le pare-feu (S) lors de l'identification de l'utilisateur selon son profil d'utilisateur (BP, BP', BP") à au moins un moyen de sortie (A) et
**en ce que** le moyen de sortie (A) présente à l'utilisateur les contenus multimédia.

4. Produit de programme informatique destiné à présenter des contenus multimédia dans un système d'ascenseur à des utilisateurs identifiés,
**caractérisé en ce que** le produit de programme informatique compare au moins un code d'identification détecté d'un utilisateur à des adresses d'identification dans une base de données d'identification (I), dans lequel le système d'ascenseur comporte au moins la base de données d'identification (I),
**en ce que** le produit de programme informatique identifie l'utilisateur en associant le code d'identification détecté à une adresse d'identification,
**en ce que** le produit de programme informatique associe un profil d'utilisateur individuel (BP, BP', BP") contenant des préférences pour des contenus multimédia à l'adresse d'identification, et
**en ce que** le produit de programme informatique télécharge les contenus multimédia d'au moins une base de données de contenus (M) selon le profil d'utilisateur (BP, BP', BP") à travers un pare-feu (S) dans le système d'ascenseur, dans lequel la communication de la base de données de contenus (M) avec le système d'ascenseur proprement dit s'effectue dans un immeuble (G) à travers pare-feu (S).

5. Produit de programme informatique selon la revendication 4, **caractérisé en ce que** le produit de programme informatique obtient des contenus multimédia chez au moins un fournisseur (V) et/ou **en ce que** le produit de programme informatique met à jour les contenus multimédia chez au moins un fournisseur (V).
